# EUROPÄISCHE PATENTANMELDUNG

(11) **EP 3 246 537 A1**
(43) Veröffentlichungstag der Anmeldung: **22.11.2017**
(21) Anmeldenummer: 16170252.7
(22) Anmeldetag: 19.05.2016
(51) Int. Cl.: F01K 23/00, F16N 7/00, F16N 7/38, F01D 25/18, F01D 25/20

(54) **MEHRWELLENKRAFTWERKSANLAGE MIT ZENTRALEM ÖLVERSORGUNGSSYSTEM**

(71) Anmelder: Siemens Aktiengesellschaft, 80333 München (DE)
(72) Erfinder: Schmidt, Matthias, 46145 Oberhausen (DE); Schreinert, David, 44793 Bochum (DE)

(57) **Zusammenfassung**

Die Erfindung betrifft eine Mehrwellenkraftwerksanlage (1) umfassend mindestens eine Gasturbineneinheit (2) mit einer ersten Welle (12) und eine Dampfturbineneinheit (3) mit einer unterschiedlichen, zweiten Welle (13), wobei weiterhin ein Schmierölsystem (20) umfasst ist, welches dazu ausgebildet ist, sowohl die Gasturbineneinheit (2) über eine erste Schmierölzuleitung (5), als auch die Dampfturbineneinheit (3) über eine zweite Schmierölzuleitung (6) mit Schmieröl zu versorgen, und wobei die erste Schmierölzuleitung (5) und die zweite Schmierölzuleitung (6) an einen gemeinsamen Versorgungstank (10) angeschlossen sind.

## Beschreibung

Die vorliegende Erfindung betrifft eine Mehrwellenkraftwerksanlage, welche mindestens eine Gasturbineneinheit mit einer ersten Welle und eine Dampfturbineneinheit mit einer unterschiedlichen, zweiten Welle aufweist.

Gasturbineneinheit und Dampfturbineneinheit werden auch als Turbosätze oder Turbogruppe der Kraftwerksanlage bezeichnet. Jeder Turbosatz einer derartigen Mehrwellenkraftwerksanlage wird typischerweise mit einem separaten Ölversorgungssystem ausgerüstet. Das Ölversorgungssystem dient hierbei zur Bereitstellung von Schmieröl wie auch Anhebeöl.

Da die einzelnen Turbosätze in der Kraftwerksanlage verhältnismäßig weit voneinander entfernt sind, sind die einzelnen Ölversorgungssysteme auch autark. Jedes Ölversorgungssystem weist hierbei mindestens ein Vorratsgefäß zur Bevorratung des Schmier- bzw. Anhebeöls auf, wobei mittels geeigneter Pumpen das jeweilige Öl über Leitungen zu dem betreffenden Turbosatz befördert wird.

Autarke Ölversorgungssysteme sind technisch aufwendig und verhältnismäßig teuer in der Anschaffung wie auch in der Wartung. Insofern stellt sich die technische Aufgabe, diese Nachteile aus dem Stand der Technik zu vermeiden und die Ölversorgung einzelner Turbosätze einer Mehrwellenkraftwerksanlage wirtschaftlicher wie auch wartungsfreundlicher zu gestalten.

Diese der Erfindung zugrundeliegende Aufgabe wird gelöst durch eine Mehrwellenkraftwerksanlage gemäß Anspruch 1 der vorliegenden Erfindung.

Insbesondere wird die der Erfindung zugrundeliegende Aufgabe gelöst durch eine Mehrwellenkraftwerksanlage umfassend mindestens eine Gasturbineneinheit mit einer ersten Welle und eine Dampfturbineneinheit mit einer unterschiedlichen, zweiten Welle, wobei weiterhin ein Schmierölsystem umfasst ist, welches dazu ausgebildet ist, sowohl die Gasturbineneinheit über eine erste Schmierölzuleitung, als auch die Dampfturbineneinheit über eine zweite Schmierölzuleitung mit Schmieröl zu versorgen, und wobei die erste Schmierölzuleitung und die zweite Schmierölzuleitung an einen gemeinsamen Versorgungstank angeschlossen sind.

Weiterhin wird die der Erfindung zugrundeliegende Aufgabe gelöst durch eine Mehrwellenkraftwerksanlage gemäß Anspruch 2.

Insbesondere wird die der Erfindung zugrundeliegende Aufgabe gelöst durch eine Mehrwellenkraftwerksanlage umfassend mindestens eine Gasturbineneinheit mit einer ersten Welle und eine Dampfturbineneinheit mit einer unterschiedlichen, zweiten Welle, wobei weiterhin ein Anhebeölsystem umfasst ist, welches dazu ausgebildet ist, sowohl die Gasturbineneinheit über eine erste Anhebeölzuleitung, als auch die Dampfturbineneinheit über eine zweite Anhebeölzuleitung mit Anhebeöl zu versorgen, und wobei die erste Anhebeölzuleitung und die zweite Anhebeölzuleitung an einen gemeinsamen Versorgungsbehältnis angeschlossen sind.

Erfindungsgemäß ist also zunächst einmal vorgesehen, dass die erste und zweite Schmierölzuleitung Schmieröl aus dem gemeinsamen Versorgungstank zu den jeweiligen Schmierölpunkten der Gasturbineneinheit bzw. der Dampfturbineneinheit führen, über welche die jeweiligen Lager der Turbosätze mit ausreichend Schmieröl versorgt werden können. Das nicht weiter benutzte Schmieröl wird anschließend typischerweise wieder abgeführt. Die Gasturbineneinheit bzw. Dampfturbineneinheit kann neben der Gasturbine bzw. der Dampfturbine zudem auch Generatoren umfassen, deren Lager ebenfalls durch die betreffenden Schmierölzuleitungen versorgt werden können.

Die Wellen von Gasturbineneinheit und Dampfturbineneinheit sind vorliegend nicht mechanisch gekoppelt, das heißt, beide Wellen sind auch nicht etwa durch eine Kupplung gekoppelt. Die Schmierölzuleitungen weisen zudem typischerweise noch geeignete Pumpen auf, über welche das Schmieröl aus dem Versorgungstank entnommen und auf ein erforderliches Druckniveau gebracht werden kann. Typische Druckniveaus bei Schmierölzuleitungen liegen etwa zwischen 5bar und 10bar.

Weiterhin sieht die Erfindung vor, dass die erste und zweite Anhebeölzuleitung Anhebeöl aus dem Versorgungsbehältnis zu den jeweiligen Zugangspunkten der Gasturbineneinheit bzw. Dampfturbineneinheit führt, über welche die jeweiligen Lager mit ausreichend Anhebeöl versorgt werden können. Das nicht weiter benutzte Anhebeöl wird anschließend wieder abgeführt. Wiederum kann die Gasturbineneinheit bzw. Dampfturbineneinheit neben der Gasturbine bzw. Dampfturbine auch jeweils einen oder mehrere Generatoren umfassen, deren Lager ebenfalls durch die betreffenden Anhebeölzuleitungen versorgt werden können.

Die Anhebeölzuleitungen weisen zudem meist noch geeignete Pumpen auf, welche das Anhebeöl aus dem Versorgungsbehältnis zu entnehmen erlauben und auf ein erforderliches Druckniveau bringen können. Typische Druckniveaus in Anhebeölzuleitungen liegen etwa zwischen 150bar und 200bar.

Aufgrund der unterschiedlichen Schmierpunkte bzw. Zugangspunkte, wie auch aufgrund der unterschiedlichen Druckniveaus innerhalb einer Schmierölzuleitung wie auch innerhalb einer Anhebeölzuleitung wird das Schmierölsystem getrennt von dem Anhebeölsystem vorgesehen. Eine Mehrfachverwendung der Leitungen zum gleichzeitigen Transport von Schmieröl wie auch Anhebeöl ist nicht vorgesehen, da dies technisch aufgrund der sehr unterschiedlichen Druckniveaus auch gar nicht sinnvoll wäre.

Das Schmieröl dient in erster Linie zur Bereitstellung von Schmierstoff im Bereich der Lager der einzelnen Turbosätze, wohingegen das Anhebeöl in erster Linie während des Anfahrvorgangs eines Turbosatzes zum Anheben der jeweiligen ersten bzw. zweiten Welle dient, um die Kontaktreibung zu überkommen. Die Funktion und Wirkungsweise von Schmieröl wie auch Anhebeöl sind damit vollständig unterschiedlich und werden aus diesem Grund auch voneinander technisch getrennt behandelt.

Erfindungsgemäß ist es aber nun vorgesehen, dass wenigstens die erste wie auch zweite Schmierölzuleitung, welche unterschiedliche Turbosätze mit Schmieröl versorgen sollen, durch den gleichen Versorgungstank mit Schmieröl versorgt werden können. Gleichermaßen kann auch die erste wie auch zweite Anhebeölzuleitung durch ein gemeinsames Versorgungsbehältnis mit Anhebeöl versorgt werden. Anstelle also für jeden Turbosatz eigenständige Ölversorgungssysteme vorzusehen, schlägt die vorliegende Erfindung vor, ein zentrales Schmierölsystem bzw. ein zentrales Anhebeölsystem vorzusehen, über welche die Schmierölleitungen bzw. Anhebeölleitungen mit entsprechend Schmieröl bzw. Anhebeöl versorgt werden können. Aufgrund dieses zentralisierten Ansatzes können zahlreiche Pumpen, welche anderenfalls mehrfach vorgesehen werden müssten, eingespart werden.

Der zentralisierte Ansatz wird zudem auch dadurch möglich, dass die Anmelderin erkannt hat, dass einzelne Turbosätze mit Schmieröl unter im Wesentlichen gleichem Versorgungsdruck beschickt werden können. Gleiches ist auch zutreffend bei der Versorgung der einzelnen Turbosätze mit Anhebeöl. Eine möglicherweise dennoch erforderliche Druckverminderung in einzelnen Leitungen kann etwa durch geeignete Druckverminderungsventile herbeigeführt werden. Infolgedessen kann trotz des zentralisierten Ansatzes zur Ölversorgung eine weitgehend auf die jeweiligen Verbraucher zugeschnitte Ölversorgungen gewährleitet werden.

In einer ersten besonders bevorzugten Ausführungsform der Erfindung ist vorgesehen, dass der Versorgungstank und das Versorgungsbehältnis identisch sind. In anderen Worten stammt das Schmieröl bzw. das Anhebeöl aus demselben Vorratstank. Schmieröl und Anhebeöl sind somit ebenfalls identisch. Infolgedessen ist es nicht mehr erforderlich, unterschiedliche Öle bereitzustellen, sondern die gesamte Ölversorgung kann über einen einzigen Vorratstank erreicht werden. Aus dem Vorratstank können die einzelnen Schmierölzuleitungen wie auch Anhebeölzuleitungen mit Hilfe von geeigneten Pumpen, welche möglicherweise ebenfalls in dem Vorratstank umfasst sind, beschickt werden.

Gemäß einer weiteren vorteilhaften Ausführungsform der Erfindung ist vorgesehen, dass weiterhin die Gasturbineneinheit mit einer ersten Schmierölableitung verschaltet ist, über welche Schmieröl zurück an den Versorgungstank geführt werden kann, und die Dampfturbineneinheit mit einer zweiten Schmierölableitung verschaltet ist, über welche Schmieröl zurück an den Versorgungstank geführt werden kann. Das an den verschiedenen Turbosätzen nicht weiter benötigte Schmieröl kann infolge mittels der Schmierölableitungen wieder dem Versorgungstank zugeführt werden, so dass ein Verlust von Schmieröl weitgehend vermieden werden kann.

Gemäß einer weiteren Ausführungsform der Erfindung ist vorgesehen, dass die Gasturbineneinheit mit einer ersten Anhebeölableitung verschaltet ist, über welche Anhebeöl zurück an das Versorgungsbehältnis geführt werden kann, und die Dampfturbineneinheit mit einer zweiten Anhebeölableitung verschaltet ist, über welche Anhebeöl zurück an das Versorgungsbehältnis geführt werden kann. Gemäß dieser Ausführungsform kann das nicht weiter benötigte Anhebeöl, etwa nach Beendigung des Anfahrens des jeweiligen Turbosatzes wieder dem Versorgungsbehältnis zugeführt werden, so dass ein Anhebeölverlust vermieden kann. Entsprechend einer darüber hinaus gehenden Ausführungsform kann auch die Anhebeölableitung mit einer Schmierölableitungen, wenigstens teilweise identisch sein. Gemäß einer besonders bevorzugten Ausführungsform der Erfindung ist vorgesehen, dass der Versorgungstank auf einem geodätischen Niveau angeordnet ist, welches unter dem Ölablaufniveau der ersten Schmierölableitung und/oder der zweiten Schmierölableitung liegt. Das Ölablaufniveau ist in erster Linie durch den Niveaustand des Schmieröls in der zugehörigen Gasturbineneinheit bzw. Dampfturbineneinheit bestimmt. Typischerweise entspricht es in etwa dem Anschlussniveau der ersten bzw. zweiten Schmierölableitung an dem zugehörigen Turbosatz. Das geodätische Niveau des Versorgungstanks entspricht ausführungsgemäß im Wesentlichen dem Füllstandniveau bzw. dem Anschlussniveau der ersten und/oder zweiten Schmierölableitung am Versorgungstank. Aufgrund der ausführungsgemäßen Anordnung von Versorgungstank und Ölablaufniveau kann ein Ablaufen des nicht weiter benötigten Schmieröls über die jeweiligen Schmierölableitungen ausschließlich durch Gravitationseffekte erreicht werden. Das Vorsehen von Rückführpumpen in den Schmierölleitungen kann somit vermieden werden. In anderen Worten kann über die jeweilige Schmierölableitung ein Gefälle vorliegend sein, durch welches das Schmieröl zu dem verhältnismäßig tiefer liegenden Versorgungstank hin ablaufen kann.

Gemäß einer weiteren besonders bevorzugten Ausführungsform der Erfindung ist vorgesehen, dass das Versorgungsbehältnis auf einem geodätischen Niveau angeordnet ist, welches unter dem Ölablaufniveau der ersten Anhebeölableitung und/oder der zweiten Anhebeölableitung liegt. Das Ölablaufniveau ist hierbei in erster Linie wieder durch den Niveaustand des Anhebeöls in der zugehörigen Gasturbineneinheit oder Dampfturbineneinheit bestimmt. Typischerweise kann es auch wieder dem Anschlussniveau der ersten bzw. zweiten Anhebeölableitung an der zugehörigen Turbosatzgruppe entsprechen. Das geodätische Niveau des Versorgungsbehältnisses entspricht hierbei wiederum im Wesentlichen dem Zustandsniveau bzw. dem Anschlussniveau der ersten oder zweiten Anhebeölableitung. Aufgrund dieser ausführungsgemäßen Anordnung kann für das aus dem jeweiligen Turbosatz abgeleitete Anhebeöl lediglich aufgrund von Gravitationseffekten die Rückführung in das Versorgungsbehältnis erreicht werden. In anderen Worten können auch die Anhebeölableitungen ausführungsgemäß wieder ein Gefälle aufweisen, durch welches das Anhebeöl in das Versorgungsbehältnis gravitativ abgeführt werden kann.

Gemäß einer weiteren Ausführungsform der Erfindung ist vorgesehen, dass in die erste Schmierölableitung und/oder die zweite Schmierölableitung eine Rückführpumpe geschaltet ist. Die Rückführpumpe gewährleistet ein sicheres Abführen des Schmieröls aus der jeweiligen Schmierölableitung und verhindert einen möglicherweise unerwünschten Rückstau in dem jeweiligen Turbosatz.

Gleichermaßen kann auch vorgesehen sein, dass in die erste Anhebeölableitung und/oder die zweite Anhebeölableitung eine Rückführpumpe geschaltet ist. Auch diese verbessert die Sicherheit bei der Rückführung des Anhebeöls zurück in das Versorgungsbehältnis.

Gemäß einer weiteren Ausführungsform der Erfindung ist vorgesehen, dass in die erste Schmierölableitung und/oder die zweite Schmierölableitung ein Ablauftank geschaltet ist, welcher auf einem geodätischem Niveau angeordnet ist, welches unter dem Ölablaufniveau der ersten Schmierölableitung und/oder der zweiten Schmierölableitung liegt. Aufgrund von geometrischen Randbedingungen bei der Leitungsführung bzw. der Gefälleanforderungen kann es mitunter der Fall sein, dass der zentral angeordnete Versorgungstank nicht direkt mit der Schmierölableitung verschaltet werden kann, um gleichzeitig ein ausreichendes Gefälle für den gravitativen Ablauf aufweisen zu können. So kann zudem aufgrund des Platzangebots bzw. des Fundamentaufbaus eine direkte Leitungsführung technisch gar nicht möglich sein. Um dennoch ein gravitatives Ablaufen zu erreichen, schlägt nun die vorliegende Ausführungsform vor, einen geeigneten Ablauftank vorzusehen, der selbst nicht die Ausmaße des zentralisierten Versorgungstanks aufweisen muss und an einem Ort aufgestellt ist, welcher insbesondere deutlich näher an der jeweiligen Gasturbineneinheit bzw. Dampfturbineneinheit aufgestellt ist als der zentrale Versorgungstank. Der Ablauftank kann also im Sinne eines Sammelvorraums verstanden werden, welcher aufgrund der räumlichen Nähe zur jeweiligen Gasturbineneinheit bzw. Dampfturbineneinheit leicht die typischerweise anfallenden Schmierölmengen durch gravitativen Ablauf aufnehmen kann. Der Ablauftank seinerseits ist wiederum mit dem Versorgungstank über die jeweilige Schmierölableitung verschaltet, so dass ein Entleeren des Ablauftanks in den zentralisiert angebrachten Versorgungstank erreicht werden kann.

Besonders bevorzugt ist hierbei, dass der Ablauftank mit dem Versorgungstank über eine Ausgleichsleitung im Sinne einer kommunizierenden Röhre in Fluidverbindung ist. Die Ausgleichsleitung ist hierbei typischerweise ein Abschnitt der ersten bzw. zweiten Schmierölableitung, welche einen freien Austausch zwischen den beiden Tanks ermöglicht. Hierbei ist natürlich darauf Acht zu geben, dass das Füllstandniveau des Versorgungstanks soweit an das geodätische Niveau bzw. den Füllstand des Ablauftanks angepasst ist, dass eine Überführung des Schmieröls mittels der Ausgleichsleitung erreicht werden kann. Ist diese einfache geometrische Voraussetzung jedoch gewährleistet, kann eine Überführung des Schmieröls aus dem Ablauftank in den Versorgungstank auch dann erreicht werden, wenn die Ausgleichsleitung bereichsweise auf einem geodätischen Niveau angebracht ist, welches über dem Füllstandniveau der einzelnen Tanks liegt. Das Prinzip der kommunizierenden Röhre ist hierbei dem Fachmann bekannt.

Gleichermaßen kann auch vorgesehen, sein, dass auch in die ersten Anhebeölableitung und/oder die zweite Anhebeölableitung ein Ablaufbehältnis geschaltet ist, welches auf einem geodätischen Niveau angeordnet ist, welches unter dem Ölablaufniveau der ersten Anhebeölableitung und/oder der zweiten Anhebeölableitung liegt. Das Ablaufbehältnis fungiert vergleichsweise dem Ablauftank als Sammelvorraum für die Zwischenspeicherung von Anhebeöl, welches aus den jeweiligen Anhebeölableitungen angeleitet wurde. Das Ablaufbehältnis ist hierbei weiterhin über eine der beiden Anhebeölableitungen mit dem zentralisiert aufgestellten Versorgungsbehältnis verschaltet, so dass ein Entleeren des Anhebeöls aus dem Ablaufbehältnis in das Versorgungsbehältnis erreicht werden kann.

Besonders bevorzugt ist hierbei wieder eine Ausführungsform, bei welcher das Ablaufbehältnis mit dem Versorgungstank über eine Ausgleichsleitung im Sinne einer kommunizierenden Röhre in Fluidverbindung ist. Die Ausgleichsleitung ist typischerweise wiederum ein Abschnitt der ersten bzw. zweiten Anhebeölableitung, welche einen Fluidaustausch zwischen den beiden Behältnissen ermöglicht. Anderenfalls gleicht die Kommunikation von Ablaufbehältnis und Versorgungsbehältnis der von Ablauftank und Versorgungstank.

Die Erfindung soll nachfolgend anhand einer Figur näher in Detail beschrieben werden. Hierbei ist darauf hinzuweisen, dass die einzelnen technischen Merkmale in den Figuren, welche mit gleichen Bezugszeichen versehen sind, gleiche technische Wirkung aufweisen.

Weiterhin ist darauf hinzuweisen, dass die nachfolgende Figur lediglich schematisch zu verstehen ist, und insbesondere eine Einschränkung der Ausführbarkeit daraus nicht entnommen werden kann.

Weiterhin ist darauf hinzuweisen, dass die nachfolgenden technischen Merkmale in beliebiger Kombination miteinander wie auch in beliebiger Kombination mit den vorab beschriebenen Ausführungsformen der Erfindung beansprucht werden sollen, soweit die daraus resultierende Kombination die der Erfindung zugrundeliegende Aufgabe lösen kann.

### Hierbei zeigt die

FIG eine Ausführungsform der erfindungsgemäßen Mehrwellenkraftwerksanlage in schematischer Schaltansicht.

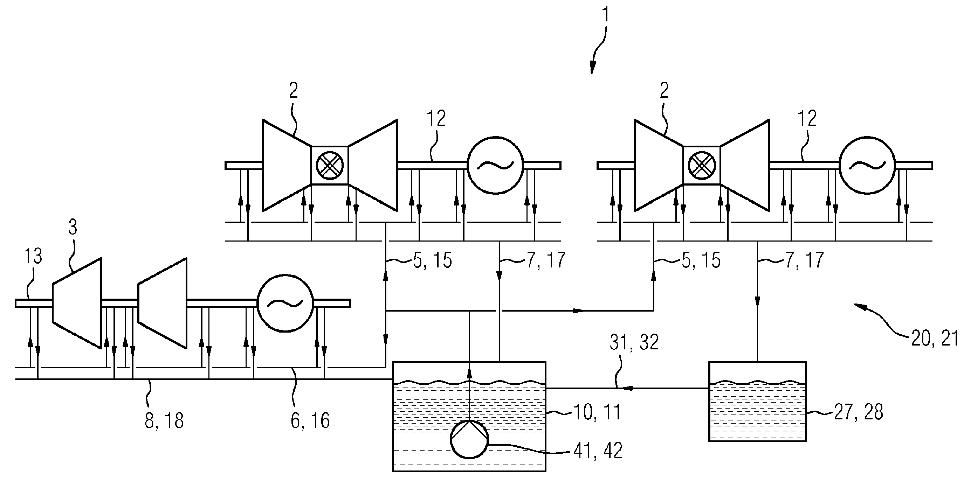

Die Figur zeigt eine schematische Schaltansicht einer Ausführungsform der erfindungsgemäßen Mehrwellenkraftwerksanlage 1, welche neben einer Dampfturbineneinheit 3, zwei Gasturbineneinheiten 2 aufweist. Die Gasturbineneinheiten 2 weisen jeweils eine erste Welle 12 auf, über welche die einzelnen Gasturbinen mit einem nicht weiter mit Bezugszeichen versehenen Generator drehtechnisch verbunden sind. Die beiden ersten Wellen der beiden Gasturbineneinheiten 2 sind hierbei nicht miteinander gekoppelt. Ebenfalls besteht keine Kopplung der beiden ersten Wellen 12 mit der zweiten Welle 13 der Dampfturbineneinheit 3. Die Dampfturbineneinheit 3 ist mehrstufig aufgebaut und weist ebenfalls einen nicht weiter mit Bezugszeichen versehenen Generator auf.

Zur Versorgung der drei Turbosätze mit Schmieröl ist eine erste Schmierölzuleitung 5 vorgesehen, welche die beiden Gasturbineneinheiten 2 mit Schmieröl versorgen kann. Hierbei wird Schmieröl an die jeweiligen Schmierpunkte der ersten Wellen 12 gebracht. Gleichzeitig ist eine zweite Schmierölzuleitung 6 vorgesehen, über welche die Dampfturbineneinheit 3 mit Schmieröl versorgt werden kann. Sowohl die erste Schmierölzuleitung 5, wie auch die zweite Schmierölzuleitung 6 werden aus einem gemeinsamen Versorgungstank 10 gespeist, in dem etwa eine Schmierölpumpe 41 in den Versorgungstank 10 die Leitungen 5 und 6 mit Schmieröl versorgt. Vorliegend gehen sogar beide Schmierölzuleitungen 5 und 6 aus einer einzigen Leitung ab, welche mit dem Versorgungstank 10 fluidtechnisch verschaltet ist.

Zum Ablauf des nach den Schmiervorgängen nicht weiter benötigten Schmieröls sind für die Gasturbineneinheiten 2 jeweils eine erste Schmierölableitung 7 vorgesehen, die erlauben, das abgeführte Schmieröl wieder dem Versorgungstank 10 zuzuführen. Hierbei weist jedoch die Schmierölableitung 7 der einen Gasturbineneinheit 2 eine Verschaltung mit einem Ablauftank 27 auf, über welchen das Schmieröl nachfolgend erst dem Versorgungstank 10 zugeführt wird. Der Ablauftank 27 dient insofern als Sammelvorraum und erlaubt die Ansammlung von nicht weiter benötigtem Schmieröl, bevor dieses dem Versorgungstank 10 zugeführt wird.

Weiterhin weist die Mehrwellenkraftwerksanlage 1 eine zweite Schmierölableitung 8 auf, über welche das Schmieröl wieder dem Vorratstank 10 zugeführt werden kann, welches für Schmiervorgänge an der Dampfturbineneinheit 3 nicht weiter benötigt wird.

Der Ablauf des Schmieröls in der zweiten Schmierölableitung 8 wie auch in den ersten Schmierölableitungen 7 erfolgt aufgrund von gravitativen Effekten. Hierzu ist der Vorratstank auf einem geodätischem Niveau angeordnet, welches geringer ist als das Ölablaufniveau der jeweiligen Schmierölableitungen 7, 8. Gleichermaßen ist das geodätische Niveau des Ablauftanks 27 unterhalb dem Ölablaufniveau der ersten Schmierölableitung 7 der zweiten Gasturbineneinheit 2 (siehe Figur) angeordnet. Auch diese Anordnung erlaubt die rein gravitative Abführung des Schmieröls mit Hilfe der ersten Schmierölableitung 7. Der Ablauftank 27 muss hierbei weiterhin mit dem Versorgungstank 10 über die erste Schmierölableitung 7 verbunden sein. Bevorzugt ist dieses Verbindungsstück als Ausgleichsleitung 31 ausgebildet, welches im Sinne einer kommunizierenden Röhre Versorgungstank 10 und Ablauftank 27 miteinander zum Fluidaustausch verbindet.

Die vorliegende Figur wurde für die Schmierölversorgung mittels eines Schmierölsystems 20 beschrieben. Gleichermaßen kann eine vergleichbare Ölversorgung auch für Anhebeöle in einem Anhebeölsystem 21 ausgebildet sein. Hierbei wird die erste Schmierölzuleitung 5 durch die erste Anhebeölzuleitung 15, die zweite Schmierölzuleitung 6 durch die zweite Anhebeölzuleitung 16, die erste Schmierölableitung 7 durch die erste Anhebeölableitung 17, wie auch die zweite Schmierölableitung 8 durch die zweite Anhebeölableitung 18 ersetzt. Ebenfalls wird der Ablauftank 27 durch ein Ablaufbehältnis 28 ersetzt. Gleichsam wird die Ausgleichsleitung durch eine weitere Ausgleichsleitung 32 ersetzt. Das Anhebeöl wird in die jeweiligen Anhebeölzuleitungen 15 und 16 mit Hilfe einer Anhebeölpumpe 42 aus dem Versorgungsbehältnis 11 befördert. Abgesehen von den unterschiedlichen physikalischen Parametern, welche in den jeweiligen Anhebeölzuleitungen 15, 16 im Vergleich zu den Schmierölzuleitungen 5, 6 vorherrschen, unterscheidet sich das Verschaltungsprinzip von Schmierölsystem 20 und Anhebeölsystem 21 nicht Wesentlich.

Ausführungsgemäß kann die vorliegende Erfindung nicht nur alternativ ein Schmierölsystem 20 oder ein Anhebeölsystem 21 darstellen, sondern sie kann auch ein kombiniertes Schmierölsystem 20 und Anhebeölsystem 21 darstellen. Die gezeigten Leitungen wären hierzu zu verdoppeln, um sowohl in einem eigenen Schmierölsystem 20 und einem Anhebeölsystem 21 das Öl an die entsprechenden Schmierpunkte bzw. Zugangspunkte zu verteilen. Der Versorgungstank 10 wäre in diesem Fall identisch mit dem Versorgungsbehältnis 11 und sowohl Schmierölsystem 20 wie auch Anhebeölsystem 21 könnte aus einem einzigen Vorratstank (Versorgungstank 10, Versorgungsbehältnis 11) gespeist werden. Gleiches gilt für den Ablauftank 27, welcher etwa mit dem Ablaufbehältnis 28 identisch sein kann. Infolgedessen wären auch die beiden Ausgleichsleitungen 31 und 32 miteinander identisch. Diese besonders bevorzugte Ausführungsform der Erfindung erlaubt es, über einen zentralisiert aufgestellten Vorratstank alle Turbosäte mit Öl geeignet zu versorgen, ohne getrennte und dezentral aufgestellte eigene Ölversorgungssystem vorsehen zu müssen.

Weitere Ausführungsformen ergeben sich aus den Unteransprüchen.

## Patentansprüche

1. Mehrwellenkraftwerksanlage (1) umfassend mindestens eine Gasturbineneinheit (2) mit einer ersten Welle (12) und eine Dampfturbineneinheit (3) mit einer unterschiedlichen, zweiten Welle (13), wobei weiterhin ein Schmierölsystem (20) umfasst ist, welches dazu ausgebildet ist, sowohl die Gasturbineneinheit (2) über eine erste Schmierölzuleitung (5), als auch die Dampfturbineneinheit (3) über eine zweite Schmierölzuleitung (6) mit Schmieröl zu versorgen, und wobei die erste Schmierölzuleitung (5) und die zweite Schmierölzuleitung (6) an einen gemeinsamen Versorgungstank (10) angeschlossen sind.

2. Mehrwellenkraftwerksanlage (1) umfassend mindestens eine Gasturbineneinheit (2) mit einer ersten Welle (12) und eine Dampfturbineneinheit (3) mit einer unterschiedlichen, zweiten Welle (13), wobei weiterhin ein Anhebeölsystem (21) umfasst ist, welches dazu ausgebildet ist, sowohl die Gasturbineneinheit (2) über eine erste Anhebeölzuleitung (15), als auch die Dampfturbineneinheit (3) über eine zweite Anhebeölzuleitung (16) mit Anhebeöl zu versorgen, und wobei die erste Anhebeölzuleitung (15) und die zweite Anhebeölzuleitung (16) an einen gemeinsamen Versorgungsbehältnis (11) angeschlossen sind.

3. Mehrwellenkraftwerksanlage nach Ansprüchen 1 und 2,
**dadurch gekennzeichnet, dass** der Versorgungstank (10) und das Versorgungsbehältnis (11) identisch sind.

4. Mehrwellenkraftwerksanlage nach Anspruch 1 oder 3,
**dadurch gekennzeichnet, dass** weiterhin die Gasturbineneinheit (2) mit einer ersten Schmierölableitung (7) verschaltet ist, über welche Schmieröl zurück an den Versorgungstank (10) geführt werden kann, und die Dampfturbineneinheit (3) mit einer zweiten Schmierölableitung (8) verschaltet ist, über welche Schmieröl zurück an den Versorgungstank (10) geführt werden kann.

5. Mehrwellenkraftwerksanlage nach Anspruch 2 bis 4,
**dadurch gekennzeichnet, dass** weiterhin die Gasturbineneinheit (2) mit einer ersten Anhebeölableitung (17) verschaltet ist, über welche Anhebeöl zurück an das Versorgungsbehältnis (11) geführt werden kann, und die Dampfturbineneinheit (3) mit einer zweiten Anhebeölableitung (18) verschaltet ist, über welche Anhebeöl zurück an das Versorgungsbehältnis (11) geführt werden kann.

6. Mehrwellenkraftwerksanlage nach einem der vorhergehenden Ansprüche 1 oder 3 bis 5,
**dadurch gekennzeichnet, dass** der Versorgungstank (10) auf einem geodätischen Niveau angeordnet ist, welches unter dem Ölablaufniveau der ersten Schmierölableitung (7) und/oder der zweiten Schmierölableitung (8) liegt.

7. Mehrwellenkraftwerksanlage nach einem der vorhergehenden Ansprüche 2 bis 6,
**dadurch gekennzeichnet, dass** das Versorgungsbehältnis (11) auf einem geodätischen Niveau angeordnet ist, welches unter dem Ölablaufniveau der ersten Anhebeölableitung (17) und/oder der zweiten Anhebeölableitung (18) liegt.

8. Mehrwellenkraftwerksanlage nach einem der vorhergehenden Ansprüche,
**dadurch gekennzeichnet, dass** in die erste Schmierölableitung (7) und/oder die zweite Schmierölableitung (8) eine Rückführpumpe geschaltet ist.

9. Mehrwellenkraftwerksanlage nach einem der vorhergehenden Ansprüche,
**dadurch gekennzeichnet, dass** in die erste Anhebeölableitung (17) und/oder die zweite Anhebeölableitung (18) eine Rückführpumpe geschaltet ist.

10. Mehrwellenkraftwerksanlage nach einem der vorhergehenden Ansprüche,
**dadurch gekennzeichnet, dass** in die erste Schmierölableitung (7) und/oder die zweite Schmierölableitung (8) ein Ablauftank (27) geschaltet ist, welcher auf einem geodätischen Niveau angeordnet ist, welches unter dem Ölablaufniveau der ersten Schmierölableitung (7) und/oder der zweiten Schmierölableitung (8) liegt.

11. Mehrwellenkraftwerksanlage nach Anspruch 10, **dadurch gekennzeichnet, dass** der Ablauftank (27) mit dem Versorgungstank (10) über eine Ausgleichsleitung (31) im Sinne einer kommunizierenden Röhre in Fluidverbindung ist.

12. Mehrwellenkraftwerksanlage nach einem der vorhergehenden Ansprüche,
**dadurch gekennzeichnet, dass** in die erste Anhebeölableitung (17) und/oder die zweite Anhebeölableitung (18) ein Ablaufbehältnis (28) geschaltet ist, welches auf einem geodätischen Niveau angeordnet ist, welches unter dem Ölablaufniveau der ersten Anhebeölableitung (17) und/oder der zweiten Anhebeölableitung (18) liegt.

13. Mehrwellenkraftwerksanlage nach Anspruch 12,
**dadurch gekennzeichnet, dass** das Ablaufbehältnis (28) mit dem Versorgungsbehältnis (11) über eine Ausgleichsleitung (31) im Sinne einer kommunizierenden Röhre in Fluidverbindung ist.
